# EUROPÄISCHE PATENTSCHRIFT

(11) **EP 1 145 808 B1**
(45) Veröffentlichungstag und Bekanntmachung des Hinweises auf die Patenterteilung: **29.11.2006**
(21) Anmeldenummer: 01107094.3
(22) Anmeldetag: 22.03.2001
(51) Int. Cl.: B25J 19/00

(54) **Kabelanordnung am Sockel und am Karussel eines Roboters**
Cable arrangement on the base and the carousel of a robot
Disposition des cables sur le socle et le carrousel d'un robot

(30) Priorität: 15.04.2000 DE 10018773
(43) Veröffentlichungstag der Anmeldung: 17.10.2001
(73) Patentinhaber: KUKA Roboter GmbH, 86165 Augsburg (DE)
(72) Erfinder: Unglert, Peter, 86169 Augsburg (DE)
(74) Vertreter: Lempert, Jost

(56) Entgegenhaltungen:
- EP-A- 0 299 083
- EP-A- 0 665 089
- DE-U- 9 103 497
- PATENT ABSTRACTS OF JAPAN vol. 017, no. 520 (M-1482), 20. September 1993 (1993-09-20) -& JP 05 138581 A (YASKAWA ELECTRIC CORP), 1. Juni 1993 (1993-06-01)
- PATENT ABSTRACTS OF JAPAN vol. 017, no. 139 (M-1385), 22. März 1993 (1993-03-22) -& JP 04 315592 A (MITSUBISHI ELECTRIC CORP), 6. November 1992 (1992-11-06)

## Beschreibung

Die Erfindung betrifft einen Roboter nach dem Oberbegriff des Anspruchs 1.

Bei bisher bekannten Robotern müssen Versorgungsleitungen mit ihren Enden durch Öffnungen von Roboterteilen in dieser hinein- und wieder herausgeführt, also eingefädelt werden. Dies bedingt, dass Anschlusselemente an solchen Versorgungsleitungen erst nach dem Einführen der Versorgungsleitung in und durch den gesamten Roboter angebracht werden können. Wenn eine Versorgungsleitung beschädigt ist, müssen zum Austausch derselben die Anschlusselemente wieder vorab entfernt, die beschädigte Leitung aus dem Roboter herausgezogen und eine neue Leitung eingeführt sowie wieder mit den Anschlusselementen versehen werden. Dies ist schon bei der Montage bzw. Herstellung des Roboters, insbesondere aber auch bei einem Austausch von Leitungen aufwendig. Ein Austausch bedingt im Reparaturfall eine erhebliche Stillstandszeit des Roboters. Ein schnelles Ausrüsten oder Reparieren ist nicht möglich.

Die JP 5-138581 zeigt einen Roboter mit Sockel, Karussell, Schwinge sowie Roboterarm und einer vom Sockel zur Schwinge durchgehenden Öffnung, die im Sockelbereich durch ein Stirnplattenteil eine die Abdeckung eines sich radial erstreckenden Nadelführungsteils und im Karussellbereich durch eine Winkelabdeckung abdeckbar sind.

Der Kabelstrang wird vom Karussellbereich zwischen zwei Streben einer Schwinge unter einer Abdeckung nach oben zum Roboterarm geführt. Dies ist nachteilig, da der in diesem Kanal bestehende Raum zur Aufnahme des Kabelstrangs eine Bewegung des Roboterarms begrenzt und damit die gesamt aufnehmbare Kabellänge begrenzt ist. Dies kann zu Einschränkungen des Bewegungsbereichs des Roboters oder auch zu Beschädigungen des geführten Kabels führen.

Der Erfindung liegt die Aufgabe zugrunde, unter Vermeidung der vorgenannten Nachteile einen gattungsgemäßen Roboter dahingehend weiterzubilden, dass unter Vermeidung von Beschädigungsgefahren bei Bewegung Roboterteile dessen Bewegüngsmöglichkeiten nicht einschränkt.

Erfindungsgemäß sieht die Erfindung zur Lösung der genannten Aufgabe bei einem gattungsgemäßen Roboter die Merkmale des Anspruchs 1 vor.

Die Bezeichnung Versorgungsstrang bezeichnet in einem Strang zusammengefasste Leitungen zur Versorgung von Werkzeugen am freien Ende des Roboterarms mit Energie, aber auch mit Spül- bzw. Kühlflüssigkeiten, Luft oder dgl., und/oder einen Kabelstrang zur Energieversorgung der Robotermötoren selbst.

Die Anschlussenden des Versorgungsstranges sind vorzugsweise konfektioniert, d.h. mit Anschlusselementen, wie Steckkontakten etc., versehen. Ein Anschlussende des Versorgungsstranges verbleibt beim Einlegen im Öffnungsbereichs des Sockels, während das andere Ende - je nach Ausgestaltung - im Öffnungsbereich des Karussells verbleibt oder aber - bei einem bis zur Roboterhand durchgeführten Versorgungsstrang - außerhalb des Öffnungsbereichs des Karussells verbleibt, wobei der Reststrang anschließend entlang der Roboterstrecken bis zur Roboterhand geführt wird.

Gemäß einer bevorzugten Ausgestaltung ist vorgesehen, dass der Versorgungsstrang eingangsseitig mit einer ersten Steckerplatte versehen ist und dass der Sockel eine Aufnahme aufweist, die durch die Steckerplatte abdeckbar ist.

Durch die erfindungsgemäße Ausgestaltung des Roboters, insbesondere im Sockelbereich sowie des Versorgungsstranges mit vorkonfektionierten Anschlüssen, wie Steckerplatten, die die Aufnahme im Sockel des Roboters abdecken können, werden die Voraussetzungen zu einer herstellungs- und wartungsfreundlicheren Montage, bzw. Reparatur des Roboters geschaffen. Dies wird grundsätzlich weiterhin dadurch unterstützt, dass der Versorgungsstrang ausgangsseitig mit einer weiteren Steckerplatte versehen ist.

Eine bevorzugte Ausgestaltung sieht vor, dass der Versorgungsstrang ununterbrochen von der eingangsseitigen Stekkerplatte zumindestens bis zu dem dem Karussell abgewandten Ende der Schwinge geführt ist. Insbesondere bei einem solch ausgestalteten Versorgungsstrang sieht die Erfindung dann weiterhin vor, dass das Karussell eine sich radial erstrekkenden Austrittsöffnungsbereich aufweist, in der der Versorgungsstrang durch eine Halterung gehalten ist, wobei unter einer sich radial erstreckenden Austrittsöffnung eine solche Öffnung verstanden wird, die im wesentlichen in einer Radialebene liegt und deren Flächenvektor demgemäss im wesentlichen tangential gerichtet ist. Die Halterung ist in der Regel zweiteilig mit einem innen liegenden und einem außen liegenden Teil ausgebildet, zwischen denen der Versorgungsstrang aufgenommen ist. Soweit der Versorgungsstrang einen die einzelnen Leitungen umgebenden RippenSchlauch aufweist besteht die Halterung aus zwei Platten, die mit ihren Innenrändern in die Nuten des Rippenschlauchs eingreifen.

Die Montagefreundlichkeit wird weiterhin dadurch erhöht, dass das radial außen liegende Teil der Halterung fest mit der Abdeckung verbunden ist, wobei insbesondere das radial außen liegende Teil der Halterung einstückig mit der Ab deckung ausgebildet ist.

In bevorzugter Weiterbildung kann vorgesehen sein, dass der Versorgungsstrang vom Karussell aus im Inneren der Schwinge geführt ist, wobei insbesondere der Versorgungsstrang seitlich durch eine Öffnung eine Seitenwandung in das Innere der Schwinge einlegbar ist. Zum Schutz des Versorgungsstranges kann weiterhin vorgesehen sein, dass die Schwinge eine abnehmbare Abdeckung aufweist, hinter der der Versorgungsstrang geführt ist.

Bei einem durchgehenden Versorgungsstrang weist dieser an seinem dem Sockel abgewandten Ende im Bereich des Roboterarmes ein Arm-Steckerfeld auf, das ebenfalls vorzugsweise als Arm-Steckerplatte ausgebildet ist.

Durch die Erfindung wird insgesamt ein Roboter geschaffen, der herstell- und wartungsfreundlich ist.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im Einzelnen erläutert ist. Dabei zeigt:
- Fig. 1a: eine bevorzugte Ausführungsform eines erfindungsgemäßen Roboters;
- Fig. 1b: die Abdeckung der Karussellöffnung des Roboters der Fig. 1a;
- Fig. 2: eine andere Darstellung des unteren Bereichs des Roboters der Fig. 1a;
- Fig. 3: den Roboter der Fig. 1a in anderer Sicht; und
- Fig. 4: eine Darstellung eines durchgehenden Versorgungsstrangs des Roboters der Ausgestaltung der Fig. 1a bis 3.

Ein erfindungsgemäßer Roboter 1 weist in üblicher Weise einen stationären Sockel 2 auf, mittels dessen der Roboter auf einer Unterlage - Boden, Wand, Decke - festgelegt ist. Der Sockel 2 ist in den Figuren offen dargestellt; er weist vorzugsweise eine abnehmbare Umfangsabdeckung auf.

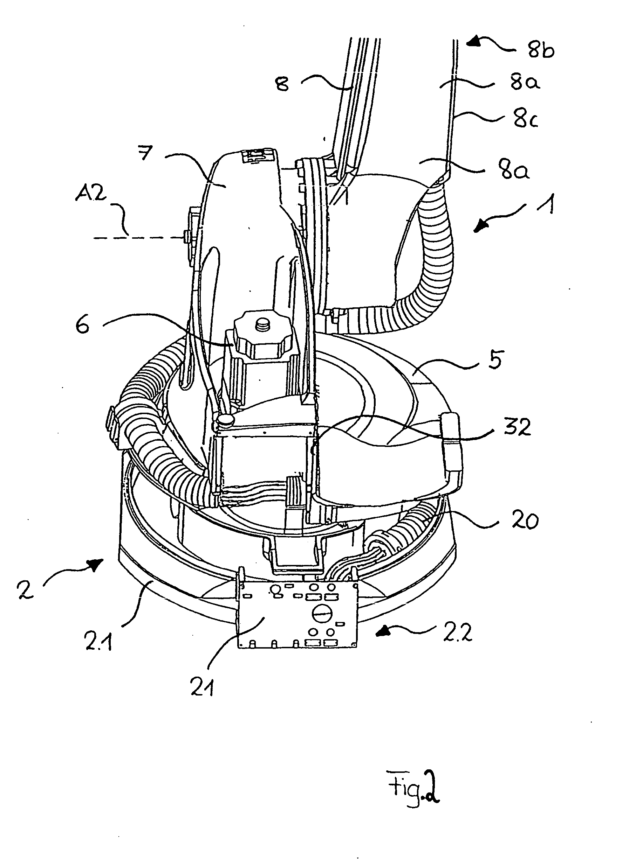

Der Roboter weist ein - bei den dargestellten Ausführungen: zentrales - Stützteil 3 auf, auf dem über eine - vorzugsweise in einem Getriebe 4 integrierte - Lagerung ein Karussell 5 des Roboters 1 drehbar um die A1-Achse gelagert ist. Der Antrieb des Karussells 5 um die A1-Achse erfolgt über einen Motor 6 (insbesondere Fig. 2). An einer Tragstruktur 7 des Karussells 5 - die den Motor 6 schützend umgibt - ist drehbar um eine horizontale A2-Achse eine Schwinge 8 des Roboters gelagert, die über einen weiteren Motor 9 verschwenkt wird. Die Schwinge 8 trägt in der Regel an ihrem oberen oder freien Ende (bei 11) einen Roboterarm 12, der wiederum (nicht dargestellt) an seinem der Schwinge 8 abgewandten freien Ende über eine drei Bewegungsachsen aufweisende Hand ein Werkzeug, wie eine Schweißzange oder ähnliches trägt. Am der Schwinge nahen Ende des Arms 12 sind Antriebsmotoren 14 (lediglich schematisch dargestellt) für den Handantrieb und gegebenenfalls den Antrieb des Werkzeugs vorgesehen, die durch den Arm 12 hindurchragende Achsen aufweisen. Der Antrieb der Handelemente sowie des Werkzeugs kann auch in anderer Weise über andere, insbesondere anders angeordnete Motoren erfolgen.

Zur Montage, d.h. zur Einlegung eines Versorgungsstranges 20 findet sich eine abdeckbare Öffnung O, die vom Sockel 2 bis zum Karussell 5 durchgehend ausgebildet ist. Der Sokkelbereich außerhalb dieser Öffnung ist durch eine herkömmliche Mantelabdeckung abdeckbar, während die Öffnung nach Einlegen des Versorgungsstranges in der weiter unten erläuterten Weise abgedeckt wird.

Der Robotersockel 2 weist in seinem unteren Bereich über seiner Bodenplatte 2.1 eine Aufnahme für Medien- oder Versorgungszufuhr auf, für die in der nicht dargestellten abnehmbaren Mantelabdeckung ein Ausnehmungsbereich vorgesehen ist.

Der Versorgungsstrang 20 weist einen äußeren Schlauch 22 auf, in dessen innerem geschützt Medien- bzw. Versorgungsleitungen 23 geführt sind, wie für die Energieversorgung des Werkzeugs, aber auch zur Zuführung von anderen Medien, insbesondere Fluiden (Luft, Flüssigkeit, wie Wasser) zum Werkzeug des Roboters, wenn derartige Medien dort einzusetzen sind.

Der Versorgungsstrang 20 ist innerhalb des Sockels 2 in einer U-förmigen Schleife geführt, wobei ein oberer und ein unterer U-Schenkel - teilkreisförmig um die A1-Achse - entlang dem Umfang des Sockels verlaufen und durch einen U-Steg verbunden sind. Hierdurch kann der Versorgungsstrang 20 innerhalb des Sockels 2 bei einer Drehung des Karussells 5 dieser kabelschleppartig folgen. Der Versorgungsstrang 20 ist weiter mit seinem oberen U-Schenkel innerhalb der Umfangskontur des Sockels aus diesem und innerhalb der Umfangskontur des Karussells 5 in den Bereich desselben geführt.

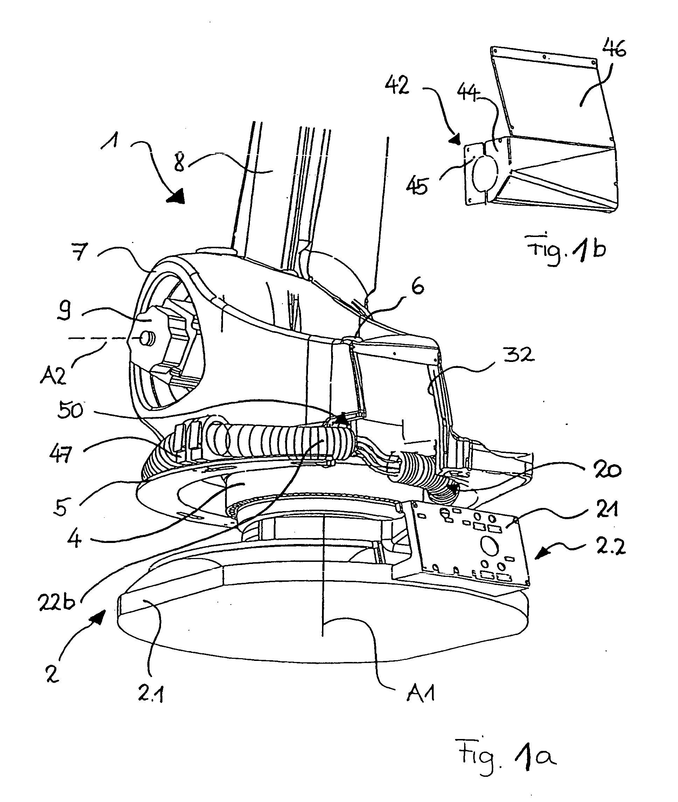

Der Erfindungsgedanke, zur Verbesserung der Herstellungs-, Service- und Wartungsfreundlichkeit einen mit vorkonfektionierten Anschlusselementen versehenen Versorgungsstrang und an den konstruktiven Roboterteilen von vornherein zur Aufnahme der Steckerplatten des vorkonfektionierten Versorgungsstranges Aufnahmen vorzusehen, wird bei den in den Figuren 1a folgende Ausführungsformen des Erfindungsroboters im Einzelnen dargestellt:.

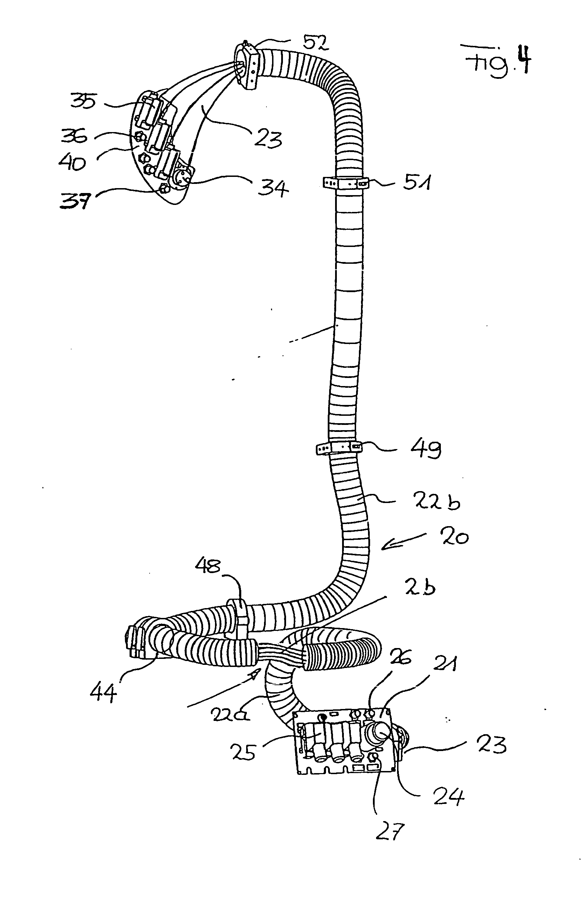

Der Versorgungsstrang 20 ist durchgehend und hinsichtlich der in ihm enthaltenen Versorgungsleitungen 23 ununterbrochen und ohne Verbindungselemente vom Sockel, d.h. von der dort vorgesehenen ersten Steckerplatte 21 bis zu einer Steckerplatte 40 jenseits des freien dem Karussell 3 im Karussell 5 abgewandten Endes der Schwinge 8, insbesondere also bis zum Arm 12 (und zu den an diesem vorgesehenen Handachsen-Motoren) 14 geführt. Lediglich der die Versorgungsleitung 23 umgebende Schutzschlauch 22 kann in zwei Bereiche 22a, 22b unterteilt sein und zwar vorzugsweise im Bereich des Übergangs des Versorgungsstrangs 20 von der Innen- zur Außenseite des Karussells 5 (insbesondere Figuren 2 und 4), um hier einen Zugriff auf die durchgehenden Versorgungsleitungen 23 (Kabel und Schläuche) zur Zugentlastung derselben zu ermöglichen.

Am Steckerfeld 40 sind wiederum die genannten Anschlusselemente 34 bis 37 vorgesehen.

Die Versorgungsleitungen eines Roboter werden, wenn sie zunächst im Sockelbereich im Inneren und unter der Karussellplatte geführt werden, aus dem Karussell nach außen herausgeführt, wie dies insbesondere in der Fig. 1a dargestellt ist. Hierzu weist das Karussell zusätzlich zur radial gerichteten Öffnung 32 eine Austrittsöffnung 50 mit in Umfangsrichtung gerichtetem Flächenvektor der Öffnungsebene für den Versorgungsstrang 20 auf.

Der Versorgungsstrang, genauer sein Schlauchteil 22b wird über die Nuten, die ein derartiger als Rippenschlauch ausgebildeter Schlauch in der Regel aufweist durch eine Halterung 42 am Karussell festgehalten. Die Halterung 42 ist im dargestellten Ausführungsbeispiel zweiteilig ausgebildet und weist ein radial innenliegendes Teil 43 mit einer halbkreisförmigen Ausnehmung und ein radial außen liegendes Teil 44 mit einer halbkreisförmigen Ausnehmung auf. Das radial innen liegende Teil 43 ist fest am Karussell angebracht, während das radial außen liegende Teil 44 an einer Abdeckung 46 für die Öffnung 32 des Karussells angebracht oder einstückig mit dieser ausgebildet ist. Derart kann auch der Versorgungsstrang, wie er in der Fig. 4 dargestellt ist, in seiner vorgefertigten Gesamtheit mit den am Strang angebrachten Steckerplatten am Roboter montiert werden, wobei dies hinsichtlich der am und im Sockel vorgesehenen Bereiche und Teile in der schon beschriebenen Weise erfolgt. Das rückwärtige Ende des Schlauchteils 22b wird im Bereich einer Nut in die halbkreisförmige Ausnehmung des plattenförmigen Halterungsteils 43 eingelegt. Anschließend wird von außen die Abdeckung 46 mit dem Halterungsteil 44 aufgesetzt, wobei diese mit den ihren Halbkreis begrenzenden Kanten ebenfalls in die gleiche Nut des Schlauchteils 22b eingreift. Dann kann die Abdeckung 46 und damit auch das Halterungsteil 44 fest mit dem Karussell verschraubt werden.

Der Versorgungsstrang 20 ist in seinem außerhalb von Sockel und Karussell aber entlang dem Umfang des Karussells geführten Bereich (in Fig. 1a links durch Halterungsschellen 41) am Karussell 5 gehalten, die ebenfalls, wie dies Fig. 4 zeigt, von vornherein, ebenso wie weitere Haltungsschellen 48, 49, 51, 52 zur Festlegung an der Schwinge bzw. dem Arm 12 des Roboters am Versorgungsschlauch vorkonfektioniert sein können.

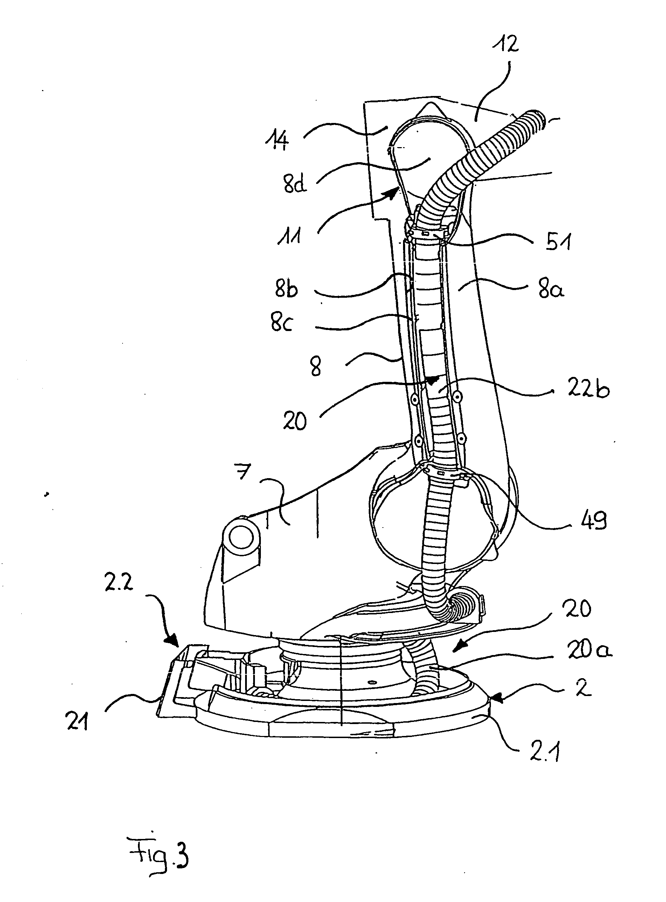

Der Versorgungsstrang wird mit seinem Schlauchteil 22b vorzugsweise durch das Innere der Schwinge 8 geführt, wobei diese eine entlang ihrer Seitenwandung 8a verlaufende Öffnung 8b aufweist, durch die der Schlauch seitlich eingelegt wird, so dass er auch hier nicht eingefädelt werden muss. Die Öffnung 8b ist durch eine aufsetzbare Abdeckung 8c (die in der Fig. 3 weggebrochen ist) verschließbar.

Insgesamt wird also der gesamte Versorgungsstrang 20 bei der Ausgestaltung der Fig. 1a bis 4 seitlich in den Roboter eingelegt, zunächst der im Sockelbereich geführte Teil mit dem Schlauchabschnitt 22a in diesem. Der Versorgungsstrang wird dann durch die Austrittsöffnung 50 aus dem inneren von Sockel und Karussell heraus, um das Karussell herum bis zur Seitenwandung 8a der Schwinge 8 geführt, dort seitlich durch die Öffnung 8b in die Schwinge eingelegt, wobei er am oberen Bereich der Schwinge aus einer Öffnung 8d wieder austritt; schließlich werden die Versorgungsleitungen 23 über die an ihrem dem Sockel abgewandten Ende vorgesehene Steckerplatte 40 am Arm 12 des Roboters festgelegt und die Verbindung mit den Motoren sowie den von den weiteren Medienleitungen versorgten Elemente hergestellt.

Die Vorrichtung ist so montage- und wartungsfreundlich und bei Beschädigungen kann das gesamte Versorgungsstrang-Paket mit angeschlossenen Steckerplatten und Halterungen leicht entfernt, durch ein unbeschädigtes ersetzt und ohne größere Betriebsunterbrechung des Roboters der beschädigte Verlorgungsstrang gegebenenfalls repariert werden.

## Patentansprüche

1. Roboter mit einem Robotersockel (3) und einem relativ zu diesem um eine vertikale Achse (A1-Achse) drehbaren Karussell (5) sowie mit mindestens einem vom Sockel (2) zumindest zum Karussell (5) im Sockel in eine U-Schlaufe geführten Versorgungsstrang (20), wobei eine vom Sockel (2) bis zum Karussell (5) durchgehende, verschließbare Öffnung (O) vorgesehen ist, durch die der Versorgungsstrang (20) mit einem U-Steg (20a) seiner U-Schlaufe vorneweg in den Sockel (2) einlegbar ist, **dadurch gekennzeichnet, dass** das Karussell (5) eine Austrittsöffnung (50) mit in Umfangsrichtung gerichteter Flächennormale aufweist, durch die der Versorgungsstrang (10) aus dem Inneren des Karussells (5) herausgeführt ist.

2. Roboter nach Anspruch 1, **dadurch gekennzeichnet, dass** die Austrittsöffnung mit einer Halterung (42) für den austretenden Versorgungsstrang (20) versehen ist.

3. Roboter nach Anspruch 2, **dadurch gekennzeichnet, dass** die Halterung (42) zweiteilig mit einem radial innen liegenden und einem radial außen liegenden Teil (43, 44) ausgebildet ist, zwischen denen der Versorgungsstrang (20) aufgenommen ist.

4. Roboter nach Anspruch 2 oder 3, **dadurch gekennzeichnet, dass** ein radial außen liegendes Teil (44) der Halterung (42) fest mit der Abdeckung (46) für die vom Sockel (2) bis zum Karussell (5) reichende Öffnung (O) verbunden ist.

5. Roboter nach Anspruch 4, **dadurch gekennzeichnet, dass** das radial außen liegende Teil (44) der Halterung (42) einstückig mit der Abdeckung (46) ausgebildet ist.

6. Roboter nach einem der Ansprüche 1 bis 5, **dadurch gekennzeichnet, dass** der Versorgungsstrang (20) eingangsseitig mit einer ersten Steckerplatte (21) versehen ist.

7. Roboter nach einem der Ansprüche 1 bis 6, **dadurch gekennzeichnet, dass** der Sockel (2) eine Aufnahme (2.2) aufweist, die durch die Steckerplatte (21) abdeckbar ist.

8. Roboter nach einem der Ansprüche 1 bis 7, **dadurch gekennzeichnet, dass** das Karussell (5) einen radial gerichtete Öffnungsbereich (32) aufweist, der durch eine Abdeckung (33, 46) verschließbar ist.

9. Roboter nach einem der Ansprüche 1 bis 8, **dadurch gekennzeichnet, dass** der Versorgungsstrang (20) ausgangsseitig mit einer weiteren Steckerplatte (40) versehen ist.

10. Roboter nach einem der vorangehenden Ansprüche, **dadurch gekennzeichnet, dass** der Versorgungsstrang (20) vom Karussell (5) aus im Inneren einer Schwinge (8) geführt ist.

11. Roboter nach Anspruch 10, **dadurch gekennzeichnet, dass** der Versorgungsstrang (20) seitlich durch eine Öffnung (8b) einer Seitenwandung (8a) in das Innere der Schwinge (8) einlegbar ist.

12. Roboter nach Anspruch 10 oder 11, **dadurch gekennzeichnet, dass** die Schwinge (8) eine abnehmbare Abdeckung (8c) aufweist, hinter der der Versorgungsstrang (20) geführt ist.

13. Roboter nach einem der Ansprüche 1 bis 12, **dadurch gekennzeichnet, dass** der Versorgungsstrang (20) ununterbrochen von der eingangsseitigen Steckerplatte (21) zumindestens bis zu dem dem Karussell (5) abgewandten Ende der Schwinge (8) geführt ist.

14. Roboter nach einem der vorangehenden Ansprüche, **dadurch gekennzeichnet, dass** der Versorgungsstrang (20) ein Arm-Stecker-Feld aufweist.

15. Roboter nach Anspruch 14, **dadurch gekennzeichnet, dass** das Arm-Stecker-Feld an einer Arm-Steckerplatte (40) ausgebildet ist.

## Claims

1. Robot with a robot base (3) and a carrousel (5) rotatable relative to the same about a vertical axis (A1 axis), as well as with at least one supply line (20) guided in a U-loop in base (2) from the latter at least to the carrousel (5), a closable opening (O) passing from the base (2) to the carrousel (5) being provided through which the supply line with a U-bar (20a) of its U-loop can be inserted initially into the base (2), **characterized in that** the carrousel (5) has an outlet (50) with a circumferentially directed surface normal through which the supply line (10) is passed out of the interior of the carrousel (5).

2. Robot according to claim 1, **characterized in that** the outlet is provided with a holder (42) for the exiting supply line (20).

3. Robot according to claim 2, **characterized in that** the holder (42) is constructed on two parts with a radially inner part (43) and a radially outer part (44) between which is received the supply line (20).

4. Robot according to claim 2 or 3, **characterized in that** a radially outer part (44) of holder (42) is firmly connected to the cover (46) for the opening (O) extending from base (2) to carrousel (5).

5. Robot according to claim 4, **characterized in that** the radially outer part (44) of holder (42) is constructed integrally with cover (46).

6. Robot according to one of the claims 1 to 5, **characterized in that** at the inlet side the supply line (20) is provided with a first plug plate (21).

7. Robot according to one of the claims 1 to 6, **characterized in that** the base (2) has a receptacle (2.2) which can be covered by the plug plate (21).

8. Robot according to one of the claims 1 to 7, **characterized in that** carrousel (5) has a radially directed opening area (32) which can be closed by a cover (33, 46).

9. Robot according to one of the claims 1 to 8, **characterized in that** the supply line (20) is provided at the outlet side with a further plug plate (40).

10. Robot according to one of the preceding claims, **characterized in that** from the carrousel (5) the supply line (20) is guided in the interior of a rocker arm (8).

11. Robot according to claim 10, **characterized in that** the supply line (20) can be inserted laterally through an opening (8b) in a side wall (8a) into the interior of rocker arm (8).

12. Robot according to claim 10 or 11, **characterized in that** the rocker arm (8) has a removable cover (8c) behind which is guided supply line (20).

13. Robot according to one of the claims 1 to 12, **characterized in that** the supply line (20) is uninterruptedly guided from the inlet-side plug plate (21) at least up to the end of rocker arm (8) remote from carrousel (5).

14. Robot according to one of the preceding claims, **characterized in that** supply line (20) has an arm-plug panel.

15. Robot according to claim 14, **characterized in that** the arm-plug panel is constructed on an arm-plug plate (40).

## Revendications

1. Robot comprenant un socle (2) de robot et un carrousel (5) tournant par rapport à celui-ci autour d'un axe vertical (axe A1) ainsi qu'au moins un cordon d'alimentation (20) allant du socle (2) au moins jusqu'au carrousel (5), guidé dans le socle par une boucle en U, un orifice (O) traversant du socle (2) jusqu'au carrousel (5) et obturable étant prévu, permettant d'insérer le cordon d'alimentation (20) en tête dans le socle (2) par une branche en U (20a) de sa boucle en U, **caractérisé en ce que** le carrousel (5) présente une ouverture de sortie (50) dont la normale est orientée dans la direction périphérique, à travers laquelle le cordon d'alimentation (10) est conduit hors de l'espace intérieur du carrousel (5).

2. Robot selon la revendication 1, **caractérisé en ce que** l'ouverture de sortie présente une pièce de maintien (42) pour le cordon d'alimentation (20) sortant.

3. Robot selon la revendication 2, **caractérisé en ce que** la pièce de maintien (42) est conformée en deux parties, une partie (43) située radialement à l'intérieur et une partie (44) située radialement à l'extérieur, entre lesquelles le cordon d'alimentation (20) est logé.

4. Robot selon la revendication 2 ou 3, **caractérisé en ce qu'**une partie (44) de la pièce de maintien (42) située radialement à l'extérieur est rigidement reliée au couvercle (46) de l'orifice (O) allant du socle (2) au carrousel (5).

5. Robot selon la revendication 4, **caractérisé en ce que** la partie (44) de la pièce de maintien (42) située radialement à l'extérieur est conformée d'une seule pièce avec le couvercle (46).

6. Robot selon l'une quelconque des revendications 1 à 5, **caractérisé en ce que** le cordon d'alimentation (20) est muni du côté de l'entrée d'une première plaque enfichable (21).

7. Robot selon l'une quelconque des revendications 1 à 6, **caractérisé en ce que** le socle (2) présente un logement (2.2) pouvant être couvert par la plaque enfichable (21).

8. Robot selon l'une quelconque des revendications 1 à 7, **caractérisé en ce que** le carrousel (5) présente une zone d'ouverture (32) orientée radialement, pouvant être obturée par un couvercle (33,46).

9. Robot selon l'une quelconque des revendications 1 à 8, **caractérisé en ce que** le cordon d'alimentation (20) est muni du côté de la sortie d'une plaque enfichable (40) supplémentaire.

10. Robot selon l'une quelconque des revendications précédentes, **caractérisé en ce que** le cordon d'alimentation (20) est guidé à partir du carrousel (5) à l'intérieur d'un bras oscillant (8).

11. Robot selon la revendication 10, **caractérisé en ce que** le cordon d'alimentation (20) peut être logé à l'intérieur du bras oscillant (8) latéralement par une ouverture (8b) d'une paroi latérale (8a).

12. Robot selon la revendication 10 ou 11, **caractérisé en ce que** le bras oscillant (8) présente un couvercle amovible (8c), derrière lequel le cordon d'alimentation (20) est guidé.

13. Robot selon l'une quelconque des revendications 1 à 12, **caractérisé en ce que** le cordon d'alimentation (20) est guidé en continu de la plaque enfichable (21) du côté de l'entrée au moins jusqu'à l'extrémité du bras oscillant (8) opposée au carrousel (5).

14. Robot selon l'une quelconque des revendications précédentes, **caractérisé en ce que** le cordon d'alimentation (20) présente un ensemble bras-fiche.

15. Robot selon la revendication 14, **caractérisé en ce que** l'ensemble bras-fiche est conformé sur une platine bras-fiche (40).
